# EUROPEAN PATENT APPLICATION

(11) **EP 3 460 681 A1**
(43) Date of publication of application: **27.03.2019**
(21) Application number: 17306237.3
(22) Date of filing: 21.09.2017
(51) Int. Cl.: G06F 17/30, G06F 3/06

(54) **REDUNDANT MEMORY OPTIMIZATION AMONG SMART DEVICES**

(71) Applicant: Thomson Licensing, 92130 Issy-les-Moulineaux (FR)
(72) Inventor: MS, Zameerun, 620008 Tiruchirappalli (IN); PARTHASARATHY, Shanmugasarathy, 600020 Chennai (IN)
(74) Representative: Amor, Rim

(57) **Abstract**

A method and apparatus are described including transmitting a table including data for a file stored in a smart device to a gateway, receiving an indication from the gateway responsive to the table, moving the file to the gateway responsive to the indication and replacing a file name in the smart device with a visual graphic representing the file for display on the smart device.

## Description

### FIELD

The proposed method and apparatus relates to identifying redundant files among smart devices, storing the identified redundant files in a gateway and removing the identified redundant files from the smart devices.

### BACKGROUND

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

As used herein, a gateway is typically a home gateway but a gateway may also include a gateway used for a small business. The terms "home gateway", "residential gateway" and simply "gateway" are used interchangeably. A gateway may also include an access point, a set top box, a router, a bridge or a brouter. As used herein, a smart device includes, but is not limited to a dual mode smart phone, a tablet, a laptop or notebook computer, an iPad, an iPod, iPhone or any equivalent mobile device.

With the increase in the quality of domestic multimedia content, the size of the multimedia content has increased enormously. As used herein, multimedia content may include downloaded or streamed content from service providers or other users or user generated content. File sharing and social media add to the continuous increase of multimedia content on smart devices. The increase in multimedia content availability has led to the storage of the multimedia content in smart devices. Storing multimedia content in smart devices has been and continues to be a great struggle due to limited memory in smart devices. That being said, it is possible that all family members receive a same file in each of their smart devices. The redundant files stored in smart devices of related individuals require a great deal of storage.

There are cloud solutions that provide memory, which can be used by smart devices to store files but none of the existing solutions address the issue related to redundant files in smart devices. For example, https://macpaw.com/how-to/find-and-remove-duplicates-in-dropbox, describes ways to remove duplicate files in the cloud but does not address the issue among smart devices.

### SUMMARY

The proposed method and apparatus addresses the above identified issues by removing redundant files from the smart devices and saving a single copy of the same in the common memory present in the gateway (or cloud). This same logic can also be applied to the redundant files present in the private memory of individual users in the gateway memory. The gateway may be a home or residential gateway and the cloud may be a home cloud.

In a first aspect, a method is described including transmitting a table including data for a file stored in a smart device to a gateway, receiving an indication from the gateway responsive to the table, moving the file to the gateway responsive to the indication and replacing a file name in the smart device with a visual graphic representing the file for display on the smart device.

In an embodiment, the data includes a hash code and a file extension for the file.

In an embodiment, the visual graphic is a thumbnail or an icon.

In an embodiment, the indication advises the smart device which file to send or which file is to be deleted from the smart device.

In another aspect a method is described including receiving a first table from a first connected smart device, receiving a second table from a second connected smart device, comparing a first parameter of the first table with the first parameter of the second table, comparing a second parameter of the first table with the second parameter of the second table responsive to the first comparison, transmitting an indication to the first connected smart device and the second connected smart device responsive to the first and second parameters of the first table matching the first and second parameters of the second table, receiving a file from the first connected smart device or the second connected smart device responsive to the indication and transmitting a visual graphic representing the file to the first connected smart device and the second connected smart device.

In an embodiment, the first parameter is a file extension.

In an embodiment, the second parameter is a hash code.

In an embodiment, the visual graphic transmitted to the first connected smart device and the second connected smart device are the same visual graphic.

In another aspect, a smart device is described including means for transmitting a table including data for a file stored in a smart device to a gateway, means for receiving an indication from the gateway responsive to the table, means for moving the file to the gateway responsive to the indication and means for replacing a file name in the smart device with a visual graphic representing the file for display on the smart device.

In an embodiment, the data includes a hash code and a file extension for the file.

In an embodiment, the visual graphic is a thumbnail or an icon.

In an embodiment, the indication advises the smart device which file to send or which file is to be deleted from the smart device.

In another aspect, a gateway is described including means for receiving a first table from a first connected smart device, means for receiving a second table from a second connected smart device, means for comparing a first parameter of the first table with the first parameter of the second table, means for comparing a second parameter of the first table with the second parameter of the second table responsive to the first comparison, means for transmitting an indication to the first connected smart device and the second connected smart device responsive to the first and second parameters of the first table matching the first and second parameters of the second table, means for receiving a file from the first connected smart device or the second connected smart device responsive to the indication and means for transmitting a visual graphic representing the file to the first connected smart device and the second connected smart device.

In an embodiment, the first parameter is a file extension and the second parameter is a hash code.

In an embodiment, the visual graphic transmitted to the first connected smart device and the second connected smart device are the same visual graphic.

### BRIEF DESCRIPTION OF THE DRAWINGS

The proposed method and apparatus is best understood from the following detailed description when read in conjunction with the accompanying drawings. The drawings include the following figures briefly described below:
Fig. 1 is an overview diagram of a system in which a gateway and a plurality of client devices operate.
Fig. 2 is a flowchart of an exemplary embodiment of the operation of a smart device in accordance with the principle of the proposed method.
Fig. 3 is a flowchart of an exemplary embodiment of the operation of a gateway in accordance with the principle of the proposed method.
Fig. 4 is a block diagram of an exemplary embodiment of a smart device.
Fig. 5 is a block diagram of an exemplary embodiment of a gateway.

It should be understood that the drawing(s) are for purposes of illustrating the concepts of the disclosure and is not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

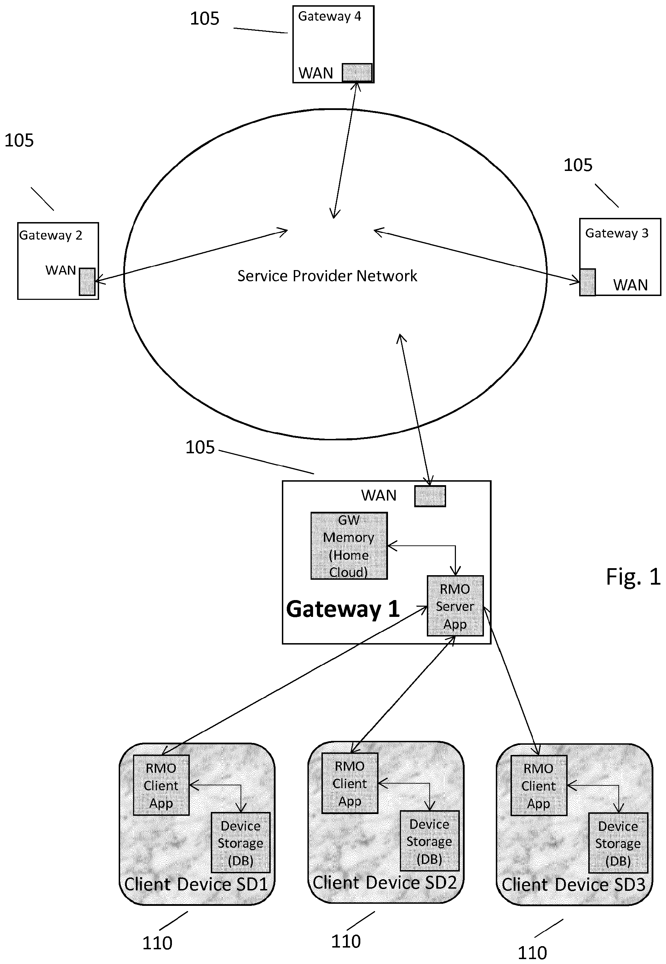

Fig. 1 is an overview of a system in which there is a gateway and at least two smart device such as described below. Gateways 105 are shown. These gateways may be home or residential gateways or be in a small business environment. Each of the gateways operably connects to and is in bi-directional communication with a service provider network via a wide area network (WAN) interface in each of the gateways. Gateway 1 is shown in bi-directional communication with client devices 110. Specifically, client devices 110 may include SD1, SD2 and SD3, which are described in greater detail below.

Consider an exemplary case of a home network with a gateway and three smart devices denoted SD1, SD2 and SD3. The gateway (or cloud) has a common memory shared by all the smart devices connected to (associated with) the gateway. Also, the gateway has an application (app) running on the gateway that controls the common memory. This common memory can be accessed from outside of the home network as well through the any network, but the access can be restricted in the gateway settings. The user, thereby, has a means to access any files stored in the gateway's common memory anytime and anywhere, thus it can be used as restricted home cloud.

### Scenario 1:

Both the devices SD1 and SD2 newly enter the network and enable the redundant memory optimization feature proposed herein. Now a Redundant Memory Optimization (RMO) client application, which will run in (be executed in) each of the smart devices collects information on all of the files stored on the smart devices with their properties such as file extension and hash codes (md5sum for example). After collecting the file data (information, digests) and properties, the RMO application creates a database (table or dataset). This database (table or dataset) is sent to the gateway (or home cloud) in which the Redundant Memory Optimization (RMO) server application is running (executing). The RMO server application receives (accepts) the database (table or dataset) and compares the newly received database (table or dataset) with the database (table or dataset) received from other smart devices or the database which already existed. In this scenario, the databases of SD1 and SD2 are compared. When both the file extensions and the hash code (e.g., md5sum) match then the file(s) is (are) moved to the gateway (or home cloud) memory thereby freeing space in the smart devices. The gateway generates (creates) and sends (transmits, forwards) a visual graphic (thumbnail, icon) to the smart devices representing the moved file. The visual graphic (thumbnail, icon) then replaces the name (or icon) of the moved redundant file in the smart device. This visual graphic (thumbnail, icon) can be used to access and retrieve the original file later. The visual graphics transmitted (sent, forwarded) to each of the smart devices is the same.

### Scenario 2:

As an extension to the above scenario 1, consider a smart device SD3 now entering into this network and enabling the RMO feature. The RMO client application running in (executing in) SD3 transfers its database (table or dataset) to the RMO Server application running in (executing in) the gateway. The RMO Server application compares all of the databases (tables or datasets) of the corresponding smart devices connected to the gateway and moves the redundant file(s) to the gateway's common memory when both the file extensions and the hash code (e.g., md5sum) match thereby freeing space in the SD3. The gateway generates (creates) and sends (transmits, forwards) a visual graphic (thumbnail, icon) to SD3 representing the moved file. The visual graphic (thumbnail, icon) then replaces the name (or icon) of the moved redundant file in SD3. This visual graphic (thumbnail, icon) can be used to access and retrieve the original file later. The visual graphics transmitted (sent, forwarded) to each of the smart devices is the same.

### Scenario 3:

As an extension to the above scenarios 1 and 2, consider a smart device SD2 has received a new file or new files. The RMO client application adds this new file to its local database (table or dataset) and sends (transmits, forwards) the data (information) and properties (e.g., file extension and hash code) of the new file to the RMO Server application, which, in turn, compares the newly received file information and properties with other files available in other smart devices (SD1 and SD3) and the common memory of the gateway. If the new file is determined to be a redundant file (based on the file information and properties (e.g., file extension(s) and hash code(s)) then the RMO server application moves the redundant file(s) to the common memory thereby freeing space in the SD2. If the redundant file is already stored in the gateway's common memory then the file may be deleted from the smart device (SD2) and not move the file(s). The gateway generates (creates) and sends (transmits, forwards) a visual graphic (thumbnail, icon) to SD2 representing the moved file. The visual graphic (thumbnail, icon) then replaces the name (or icon) of the moved redundant file in SD2. The visual graphic(s) (thumbnail(s), icon(s)) can be used to access and retrieve the original file(s) later. The visual graphics transmitted (sent, forwarded) to each of the smart devices is the same.

In all the above scenarios, the database refers to data structure, for example a table including at least one of the file name, file extension, hash table and file size. The RMO server application compares the hash codes (e.g., md5sum) of files which have the same extensions only. If the hash codes (e.g., md5sum) match, then the file is moved to the common memory of the gateway (or home cloud) by one of the smart devices having redundant files. The same RMO logic may be applied to private memory of the smart devices on the gateway. The communication protocol used between smart devices (RMO client) and gateway (or home cloud) could be any short range communication protocol or any wired network protocol. The "hash code" of the file refers the creation of checksum using the entire file content. This RMO logic can be applied within any device and also in corporate storage servers.

The RMO application (app) has a user setting in which the user has the options of excluding certain files from applying this RMO logic. Thus, the user can avoid the movement of the excluded files from the local memory of any smart device to the common memory of the gateway device (home cloud).

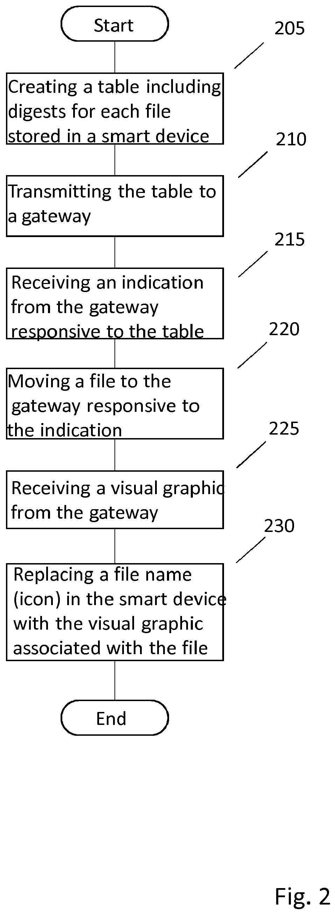

Fig. 2 is a flowchart of an exemplary embodiment of the operation of a smart device in accordance with the principle of the proposed method. At 205 the smart device creates a table including data (information, digests) for each file stored in the smart device. The data (information, digests) include the file extension and hash code of each file. At 210 the smart device transmits (sends, forwards) the table to a gateway associated with the smart device. The gateway may be a home gateway or a home cloud device. At 215 the smart device receives an indication from the gateway responsive to the table. That is, the gateway makes a determination if one or more of the files stored on the smart device are redundant (duplicative) with files already stored on the gateway or stored in other smart devices associated with the gateway. If one or more of the files are redundant (duplicative) then the indication advises which file or files stored on the smart device are to be forwarded (transmitted, sent) to the gateway. If the redundant file is already stored in the gateway's common memory then the redundant file may simply be deleted from the smart device and not moved to the gateway's common memory. If one or more smart devices have redundant files then only one smart device needs to transmit (send, forward) the redundant file to the gateway. The files on the other smart devices that are redundant can be removed (deleted). The indication advises the smart device(s) which file or files to send and which file or files are to be deleted (removed). At 220 the smart device that received an indication to move (forward, transmit, send) the redundant (duplicative) file transmits (forwards, sends) the redundant file to the gateway associated with the smart device. At 225 the smart device receives a visual graphic (thumbnail, icon) from the gateway. The visual graphic (thumbnail, icon) could be generated by the smart device but for consistency in the look and feel of the visual graphics (thumbnails, icons), the visual graphics (thumbnails, icons) are transmitted (forwarded, sent) to the smart devices by the gateway. The smart device can always discard the visual graphic (thumbnail, icon) received from the gateway in favor of its own generated visual graphic (thumbnail, icon). As used herein a visual graphic is a thumbnail or icon representing the file. At 230 the smart device replaces the file name (or icon) with the visual graphic (thumbnail, icon) (either the received visual graphic (thumbnail, icon) or a smart device generated visual graphic (thumbnail, icon)).

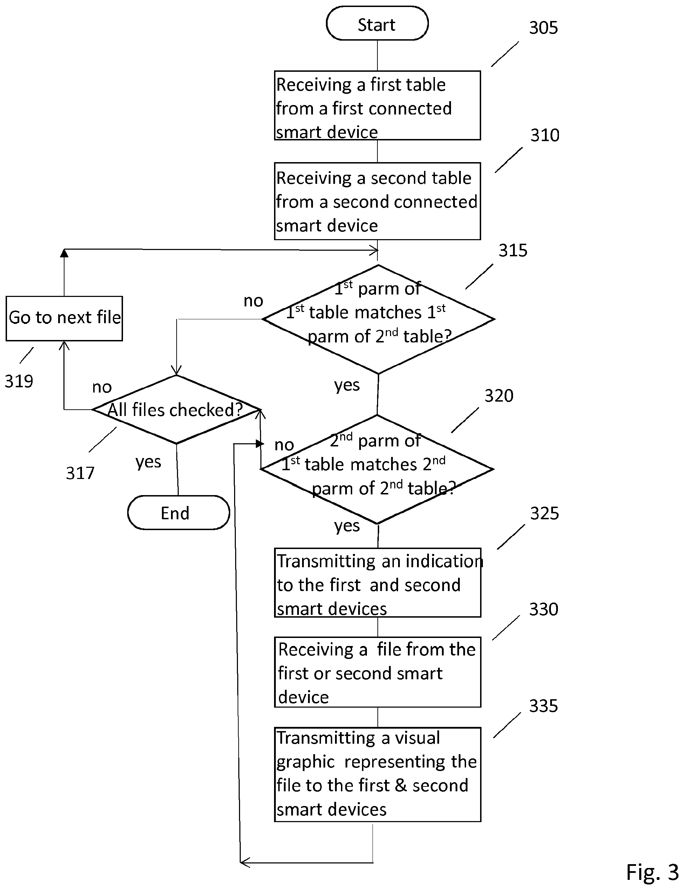

Fig. 3 is a flowchart of an exemplary embodiment of the operation of a gateway in accordance with the principles of the proposed method. At 305 the gateway receives a first table (database) from a first smart device. At 310 the gateway receives a second table (database) from a second smart device. At 315 the gateway compares a first parameter of each file of the first table (database) with the first parameter of each file of the second table (database). For example, the first parameter is the file extension of a file. If the first parameters of files in the first and second tables match then the gateway proceeds to 320 where the gateway compares the second parameter (hash code) of each file having matching first parameters from the first and second tables (databases). If the second parameters match then at 325 the gateway transmits an indication to the first and second smart devices advising which of the two smart devices is to transmit the file to the gateway and which of the two smart devices is to delete the redundant (duplicative) file. At 330 the gateway receives the redundant (duplicative) file from one of the two smart devices as indicated in the transmitted indication. At 335 the gateway transmits (forwards, sends) to the smart devices a visual graphic (thumbnail, icon) to replace the file name (or icon) of the redundant (duplicative) file in the smart device. Processing then proceeds to 317. If the first parameters of a file did not match or after 335 then at 317 a test is performed to determine if there are any other files in the tables (databases) to have the first parameters compared. If there are no other files in the table (database) to have their first parameters compared then processing ends. If there are still files in the tables (databases) to have their first parameters compared then processing proceeds to 315. At 320 if the second parameters do not match then processing proceeds to 317. If there are more files that need their parameters compared then at 319 processing goes (moves) to the next file. This may be through the use of a counter or pointer. The counter may be an up counter (that is incremented) or a down counter (that is decremented).

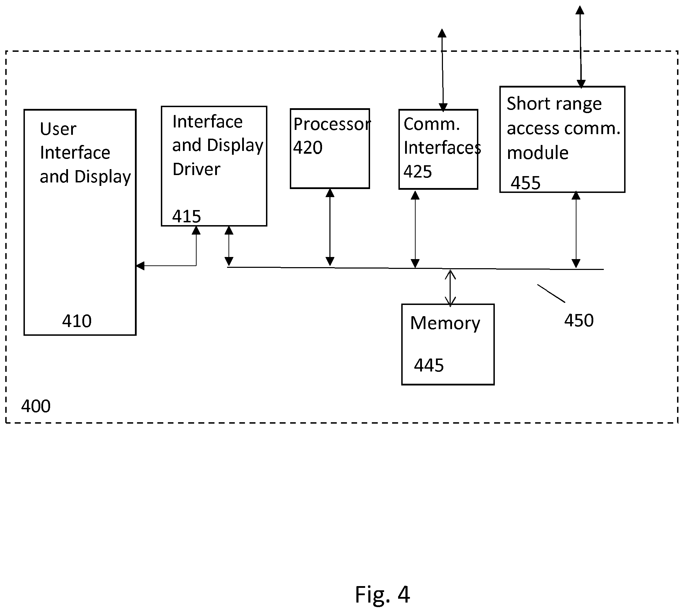

Fig. 4 is a block diagram of an exemplary embodiment of a smart device for practicing the proposed method. The block diagram configuration includes a bus-oriented 450 configuration interconnecting a processor (processing unit) 420, and a memory 345. The configuration of Fig. 4 also includes a wireless communication interface 425. A second wireless communications module 455 is for short range access communications. User interface and display 410 is driven by interface circuit 415. The short range access communications interface 455 is in communication with the remaining components (modules) in the smart device through the bus 450.

The smart device includes at least one processor 420 that provides computation functions for the smart device, such as depicted in Fig. 1. The processor 420 can be any form of CPU or controller that utilizes communications between elements of the smart device to control communication and computation processes. Those of skill in the art recognize that bus 450 provides a communications path between the various elements of embodiment 400 and that other point-to-point interconnection options (e.g. non-bus architecture) are also feasible.

Any or all of the functionality included in the network access device may be embodied as application specific integrated circuits (ASICs), field programmable gate arrays (FPGAs), reduced instruction set computers (RISCs) or any other equivalent separate type of co-processor integrated into processor 420.

Memory 445 can act as a repository for memory related to any of the methods that incorporate the functionality of the smart device. Memory 445 can provide the repository for storage of information such as program memory, downloads, uploads, or scratchpad calculations. Those of skill in the art will recognize that memory 445 may be incorporated all or in part of processor 420. Communication interface 425 has both receiver and transmitter elements for wireless communications. Short range access communication module 455 has both a receiver and transmitter (or transceiver) for short range access communications as known to those of skill in the art. Program instructions for operation of the processor of the smart device may be in memory 445 or may be in processor.

The processing in accordance with the method shown in Fig. 2 is predominantly performed in the processor 420 and the short range access communications module 455 and/or communications interface 425. The processor performs the steps/acts of the method but the reception and transmission between the smart device 400 and the gateway is through the short range access communications module 355 and/or communications interface 425.

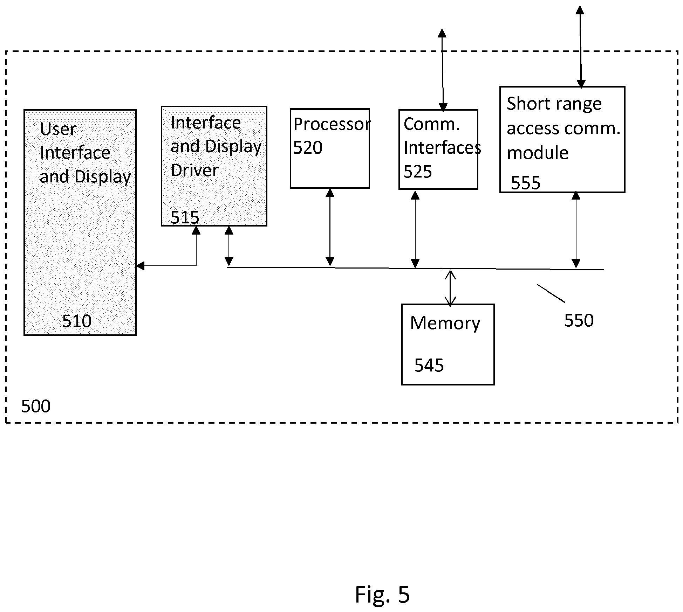

Fig. 5 is a block diagram of an exemplary embodiment of a gateway for practicing the proposed method. The block diagram configuration includes a bus-oriented 550 configuration interconnecting a processor (processing unit) 520, and a memory 545. The configuration of Fig. 5 also includes a communication interface 525. The communication interface 525 may be wired or wireless and may in fact, include two interfaces - one for wired line communication and one for wireless communication. A second wireless communications module 555 is for short range access communications. User interface and display 510 is driven by interface circuit 515. User interface 510 and interface circuit 515 are shaded in gray as these modules (component) may or may bot be present in the gateway. If they are not present in the gateway then they may be replaced by indicator lights instead of a display screen and keyboard like entry module (component). The short range access communications interface 555 is in communication with the remaining components (modules) in the gateway through the bus 550.

The gateway includes at least one processor 520 provides computation functions for the gateway, such as depicted in Fig. 3. The processor 520 can be any form of CPU or controller that utilizes communications between elements of the smart device to control communication and computation processes. Those of skill in the art recognize that bus 550 provides a communications path between the various elements of embodiment 500 and that other point-to-point interconnection options (e.g. non-bus architecture) are also feasible.

Any or all of the functionality included in the network access device may be embodied as application specific integrated circuits (ASICs), field programmable gate arrays (FPGAs), reduced instruction set computers (RISCs) or any other equivalent separate type of co-processor integrated into processor 520.

Memory 545 can act as a repository for memory related to any of the methods that incorporate the functionality of the gateway. Memory 545 can provide the repository for storage of information such as program memory, downloads, uploads, or scratchpad calculations. Those of skill in the art will recognize that memory 545 may be incorporated all or in part of processor 520. Communication interface 525 has both receiver and transmitter elements for wired and/or wireless communications. Short range access communication module 555 has both a receiver and transmitter (or transceiver) for short range access communications as known to those of skill in the art. Program instructions for operation of the processor of the gateway may be in memory 545 or may be in processor.

The processing in accordance with the method shown in Fig. 3 is predominantly performed in the processor 520 and the short range access communications module 555 and/or communications interface 525. The processor performs the steps/acts of the method but the reception and transmission between the smart device 500 and the gateway is through the short range access communications module 555 and/or communications interface 525.

It is to be understood that the proposed method and apparatus may be implemented in various forms of hardware, software, firmware, special purpose processors, or a combination thereof. Special purpose processors may include application specific integrated circuits (ASICs), reduced instruction set computers (RISCs) and/or field programmable gate arrays (FPGAs). Preferably, the proposed method and apparatus is implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

It is to be further understood that, because some of the constituent system components and method steps depicted in the accompanying figures are preferably implemented in software, the actual connections between the system components (or the process steps) may differ depending upon the manner in which the proposed method and apparatus is programmed. Given the teachings herein, one of ordinary skill in the related art will be able to contemplate these and similar implementations or configurations of the proposed method and apparatus.

For purposes of this application and the claims, using the exemplary phrase **"at least one** of A, **B and** C," the phrase means "only A, or only B, or only C, or any combination of A, B and C."

## Claims

1. A method comprising:
transmitting (205) a table including data for a file stored in a smart device to a gateway;
receiving (215) an indication from said gateway responsive to said table;
moving (220) said file to said gateway responsive to said indication; and
replacing (230) a file name in said smart device with a visual graphic representing said file for display on said smart device.

2. The method according to claim 1, wherein said data includes at least one of a hash code and a file extension for said file.

3. The method according to claims 1 or 2, wherein said visual graphic comprises a thumbnail or an icon.

4. The method according to any one of the preceding claims, wherein the indication indicates to said smart device which file to send or which file is to be deleted from said smart device.

5. A method comprising:
receiving (305) a first table from a first connected smart device;
receiving (310) a second table from a second connected smart device;
comparing (315) a first parameter of said first table with said first parameter of said second table;
comparing (320) a second parameter of said first table with said second parameter of said second table responsive to said first comparison;
transmitting (325) an indication to said first connected smart device and said second connected smart device responsive to said first and second parameters of said first table matching said first and second parameters of said second table;
receiving (330) a file from said first connected smart device or said second connected smart device responsive to said indication; and
transmitting (335) a visual graphic representing said file to said first connected smart device and said second connected smart device.

6. The method according to claim 5, wherein said first parameter is a file extension.

7. The method according to claims 5 or 6, wherein said second parameter is a hash code.

8. The method according to any one of claims 5 to 7, wherein said visual graphic transmitted to said first connected smart device and said second connected smart device are the same visual graphic.

9. A smart device comprising:
means for transmitting (455) a table including data for a file stored in a smart device to a gateway;
means for receiving (455) an indication from said gateway responsive to said table;
means for moving (455) said file to said gateway responsive to said indication; and
means for replacing (420) a file name in said smart device with a visual graphic representing said file for display on said smart device.

10. The smart device according to claim 9, wherein said data includes a hash code and a file extension for said file.

11. The smart device according to claims 9 or 10, wherein said visual graphic is a thumbnail or an icon.

12. The smart device according to any one of claims 9 to 11, wherein the indication indicates to said smart device which file to send or which file is to be deleted from said smart device.

13. A gateway comprising:
means for receiving (555) a first table from a first connected smart device;
means for receiving (555) a second table from a second connected smart device;
means for comparing (520) a first parameter of said first table with said first parameter of said second table;
means for comparing (520) a second parameter of said first table with said second parameter of said second table responsive to said first comparison;
means for transmitting (555) an indication to said first connected smart device and said second connected smart device responsive to said first and second parameters of said first table matching said first and second parameters of said second table;
means for receiving (555) a file from said first connected smart device or said second connected smart device responsive to said indication; and
means for transmitting (555) a visual graphic representing said file to said first connected smart device and said second connected smart device.

14. The gateway according to claim 13, wherein said first parameter is a file extension and said second parameter is a hash code.

15. The gateway according to claims 13 or 14, wherein said visual graphic transmitted to said first connected smart device and said second connected smart device are the same visual graphic.
